# EUROPÄISCHE PATENTSCHRIFT

(11) **EP 1 830 572 B1**
(45) Veröffentlichungstag und Bekanntmachung des Hinweises auf die Patenterteilung: **01.07.2009**
(21) Anmeldenummer: 07100888.2
(22) Anmeldetag: 22.01.2007
(51) Int. Cl.: H04N 7/18, B60R 1/00, G01C 21/26, G01C 11/00, H04N 5/232, H04N 3/15

(54) **Kurvenfolgendes Frontvideosystem**
Visual curve front video system
Système vidéo frontal suivant les courbes

(30) Priorität: 02.03.2006 DE 102006009661
(43) Veröffentlichungstag der Anmeldung: 05.09.2007
(73) Patentinhaber: ROBERT BOSCH GMBH, 70442 Stuttgart (DE)
(72) Erfinder: Franz, Gerald, 71522 Backnang (DE)

(56) Entgegenhaltungen:
- DE-A1- 19 950 033
- JP-A- 4 166 920
- JP-A- 10 285 475
- JP-A- 2000 013 665
- JP-A- 2004 082 918
- US-A- 5 557 327
- US-A1- 2004 101 294

## Beschreibung

### Stand der Technik

DE 109 50 033 A1 bezieht sich auf eine Kameravorrichtung für Fahrzeuge. Die Kamera ist zur Erfassung eines vor einem Fahrzeug liegenden Straßenverlaufs variabel ausrichtbar. Die Ausrichtung der Kamera erfolgt durch ein Steuergerät, welches fahrdynamische Parameter des Fahrzeugs und/oder eine satellitengestützte Information über den aktuellen Standort des Fahrzeuges, den Verlauf und/oder die örtliche Lage der Straße erhält. Das Steuergerät erhält das Ausgangssignal einer Navigationsvorrichtung für den Standort. Das Steuergerät und die Navigationsvorrichtung sind ineinander integrierte Bauteile. Mittels des Steuergerätes lässt sich das Erfassungsfeld der Kamera steuern.

EP 1 504 960 A1 bezieht sich auf ein Verfahren und eine Vorrichtung zur Verbesserung der Sicht in einem Kraftfahrzeug. Aus dem Bild der Umgebung des Kraftfahrzeuges, in welches eine Kamera integriert ist, wird ein Bildausschnitt bereitgestellt. Die Größe des Bildausschnitts und zusätzlich oder alternativ die Position des Bildausschnitts innerhalb des Bildes werden in Abhängigkeit des Straßenverlaufs und/oder der aktuellen und/oder vom Fahrer gewünschten Fahrtrichtung des Kraftfahrzeugs eingestellt. Als Größe des Bildausschnittes kann dessen Breite und/oder dessen Höhe eingestellt werden. Der Straßenverlauf wird in Abhängigkeit von Daten wenigstens eines Navigationssystems oder von Bilddaten wenigstens einer Kamera, oder von Bilddaten der wenigstens einen Kamera und von Daten wenigstens einer Einrichtung zur Fahrzeug-Kraftfahrzeugkommunikation ermittelt. Ferner kann der Straßenverlauf in Abhängigkeit von Daten wenigstens eines weiteren Kraftfahrzeugsensors, so z. B. eines Radarsensors, ermittelt werden. Die Größe des Bildausschnittes beziehungsweise dessen Position innerhalb des wenigstens einen Bildes kann ferner in Abhängigkeit von Daten wenigstens eines weiteren Kraftfahrzeugsensors, insbesondere eines Lenkradsensors, eines Lenkwinkelsensors oder wenigstens eines Drehratensensors, eingestellt werden.

Die gattungsbildende Druckschrift DE 199 50 033 A1 beschreibt eine verschwenkbare Kamera, die sich in Richtung eines folgenden Kurvenverlaufs verstellt. Hierzu wird die gesamte Kamera drehbar gelagert, wobei durch diese Anordnung die gesamte Kamera geschwenkt wird.

Die Druckschrift US 2004/0101294 A1 zeigt ein Bilderfassungssystem für Satelliten, bei dem ein Bildsensor von piezoelemente getragen wird, die einen Hub von typischerweise 90 µm erlauben. Die Piezoelemente erlauben eine Feinjustierung, um ein Auflösungsfeld mit einem Photodetektorfeld in Übereinstimmung zu bringen, wobei das Photodetektorfeld einzelne, in einer Matrix angeordnete Sensoren umfasst. Die durch die Piezoelemente vorgesehene Justierung des Gesichtsfelds betrifft Abbildungen von Objekten, die typischerweise 600 km entfernt sind, wobei der maximale Justierungshub dieser Entfernung und dem entsprechenden überstrichenen Gesichtsfeldwinkel entspricht.

In Kraftfahrzeugen werden zunehmend Frontvideosysteme zum Einsatz als Fahrerassistenzsysteme, so z. B. als Nachtsichtsysteme oder warnende Videosysteme, eingesetzt. Diese Systeme arbeiten in der Regel mit starr montierten Fixfokuskameras, die die unerwünschte Eigenschaft aufweisen, dass bei Kurvenfahrten der interessierende Bereich der vor den Kraftfahrzeugen liegenden Szene das Gesichtsfeld der Kamera verlässt. Eine Möglichkeit, dies zu verhindern, ist eine entsprechende Nachführung der Kamera, die hinsichtlich einer Geherwinkelnachführung oder eines horizontalen Schwenkens der Kamera gesteuert wird, wie z. B. aus DE 199 50 933 A1 bekannt. Nachteilig ist die aufgrund der harten Bedingungen für Automobilanwendungen hinsichtlich der Erschütterungen, des kleinen zur Verfügung stehenden Bauraums sowie der erforderlichen kurzen Reaktionszeiten konstruktiv sehr aufwändig realisierbar. Mit der aus EP 1 504 960 A1 bekannten Lösung geht ein recht aufwändiger Rechenaufwand einher, bis der Bildausschnitt innerhalb des Bildes entsprechend der vom Fahrer gewünschten Fahrtrichtung des Fahrzeuges eingestellt wird.

### Offenbarung der Erfindung

Der Erfindung liegt die Aufgabe zugrunde, ein Kamerasystem für Kraftfahrzeuge bereitzustellen, welches ohne ein Schwenken der Kamera eine Erfassung des Umfeldes vor dem Fahrzeug, insbesondere bei Kurvenfahrt, ermöglicht.

Erfindungsgemäß wird dies dadurch erreicht, dass in dem Kamerasystem anstelle der ganzen Kamera lediglich der Bildsensor spielfrei bewegt wird. Durch die geringe zu bewegende Masse des Bildsensors lässt sich eine kurze Reaktionszeit des Systems, was insbesondere bei Kurvenfahrt von hoher Wichtigkeit ist, auch bei kleinem zur Verfügung stehenden Bauraum realisieren. Der Bildsensor wird dazu z. B. abhängig vom Lenkeinschlag oder nicht erfindungsgemäß vom Gierwinkel oder einer Seitenbeschleunigung des Fahrzeugs mit einer Auslenkkraft beaufschlagt, welche den Bildsensor gegensinnig zum Lenkeinschlag relativ zu einem feststehenden Objektiv der Kamera bewegt. Daneben ist es ebenfalls nicht erfindungsgemäß möglich, den Bildsensor abhängig von satellitengestützten Informationen, so z. B. abhängig von den Navigationsdaten eines Navigationssystems (GPS), relativ zum Objektiv der Kamera zu bewegen.

Der Bildsensor des Kamerasystems kann z. B. auf einem Verschiebe-/Neigeelement aufgenommen sein. Dieses Verschiebe-/Neigeelement ist in die Kamera des Videosystems integriert und kann z. B. ein Festkörperelement umfassen, welches drei elastische Teile umfassen kann, welche bevorzugt als parallel zueinander ausgerichtete, streifenförmige Elemente unterschiedlicher Federhärte ausgeführt werden. Dadurch lässt sich der Bildsensor mittels eines Einstellelementes durch Aufbringen einer Auslenkkraft, z. B. dem Lenkeinschlag, so nachführen, dass der Bildsensor gleichzeitig eine seitliche Verschiebung dy, eine Fokussierung dz und eine Neigung α erfährt.

Eine geeignete Auslegung hinsichtlich der Länge r der streifenförmigen Elemente bestimmt den Verlauf sich einstellenden Defokussierung aufgrund der Relativbewegung des Bildsensors zum Objektiv des Kamerasystems. Neben der Auslegung der Länge r hinsichtlich der streifenförmig konfigurierten Elemente unterschiedlicher Federhärte bestimmt die Ausgestaltung der streifenförmigen Elemente, die an der Außenseite des Bildsensors befestigt sind, hinsichtlich ihrer Federsteifigkeit, im Gegensatz zum mittig angeordneten streifenförmigen Element, die Neigung α des Bildsensor. Die beiden außenliegenden streifenförmigen Elemente weisen dazu eine kleinere Federkonstante auf, verglichen zur Federkonstanten des innenliegenden Elementes b. Die beiden außenliegenden streifenförmigen Elemente sind relativ zum innenliegenden elastischen streifenförmigen Element elastisch verformbar. Aufgrund der gewählten Federsteifigkeitsverteilung hinsichtlich der den Bildsensor aufnehmenden streifenförmigen Elemente stellt sich bei der Auslenkung des Bildsensors, abhängig vom Lenkeinschlag, einem Gierwinkel oder einer Seitenbeschleunigung eine gerichtete Kraft F ein, welche durch ein Einstellelement auf den Bildsensor wirkt, so dass dieser die gewünschte Neigung α annimmt. Die Auslenkung des Bildsensors kann auch nicht erfindungsgemäß abhängig von Navigationsdaten eines Fahrzeugnavigationssystems (GPS) erfolgen.

Durch eine entsprechende Auslegung hinsichtlich der Federsteifigkeit, des Betrages und der Richtung der auf den Bildsensor einwirkenden Kraft *F̅* übertragen durch das mindestens eine Einstellelement, kann die der jeweiligen Auslegung des Bildsensors entsprechende Neigung α sowie die Defokussierung dz des Bildsensors gleichzeitig eingestellt werden.

Durch die erfindungsgemäß vorgeschlagene Lösung lässt sich die seitliche Verschiebung dy ausgleichen. Die seitliche Verschiebung dy ist ebenfalls durch die Länge der streifenförmigen Elemente festgelegt, was bedeutet, dass sich entweder die Defokussierung dz oder die seitliche Verschiebung dy ausgleichen lässt. Beim vorgestellten Ausführungsbeispiel wurde die Defokussierung dz ausgeglichen, so dass sich für die seitliche Verschiebung dy eine Abweichung von nur wenigen Prozent ergibt. Eine solche Abweichung ist hinsichtlich der Genauigkeitsanforderungen an die seitliche Nachführung des Bildsensors von der Idealposition des Bildsensors im Vergleich zu einer seitlichen Verschiebung dy von mehr als 20% (bezogen auf die maximale Bildhöhe) ohne mechanische Nachführung akzeptabel.

### Zeichnung

Anhand der Zeichnung wird die Erfindung nachstehend eingehender beschrieben.

Es zeigt:
- Figur 1: ein Kamerasystem mit relativ zu einem feststehenden Objektiv auslenkbaren Bildsensor, hier in Geradeausfahrt dargestellt,
- Figur 2: das in Figur 1 für Geradeausfahrt dargestellte Kamerasystem bei der Passage einer Rechtskurve und dementsprechend ausgelenkten Bildsensor,
- Figur 3: die sich einstellende Defokussierung in Abhängigkeit vom Ablenkwinkel,
- Figur 4: die Neigung des Sensors in Abhängigkeit vom Ablenkwinkel und
- Figur 5: die seitliche Verschiebung in Abhängigkeit vom Ablenkwinkel.

### Ausführungsbeispiele

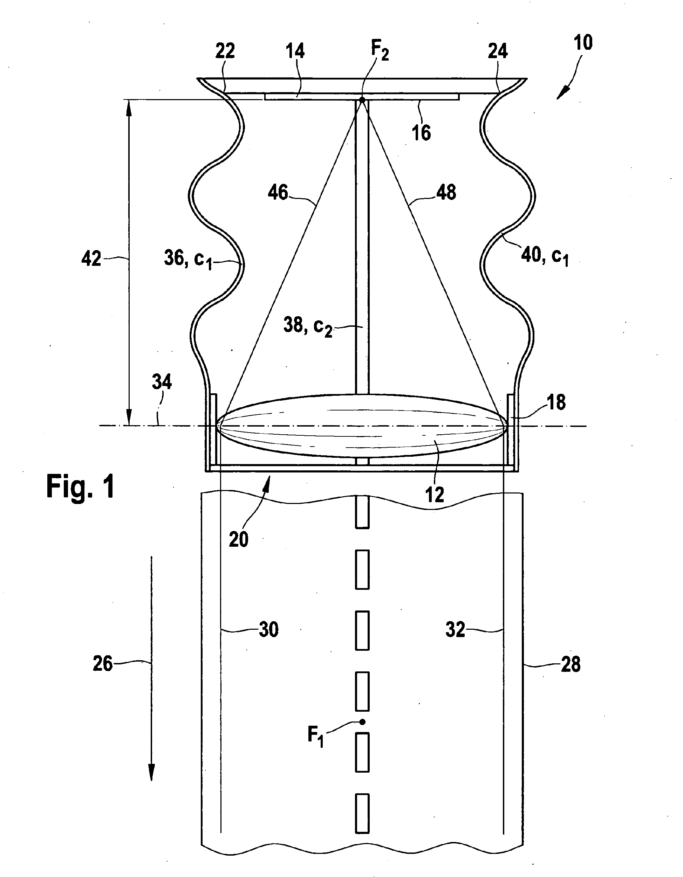

Der Darstellung gemäß Figur 1 ist eine Kamera eines Videosystems für Fahrzeuge bei Geradeausfahrt des Fahrzeugs zu entnehmen.

Eine Videokamera 10 eines Frontvideosystems, welches insbesondere in Kraftfahrzeugen eingesetzt wird, umfasst ein Objektiv 12 sowie einen Bildsensor 14. Die Oberfläche des Bildsensors 14 bildet die Bildebene 16 in einem Abstand, zu der das Objektiv 12 in einer Objektivhalterung 18 der Videokamera 10 aufgenommen ist.Vor der Objektivhalterung 18 des Objektivs 12 befindet sich ein Fuß eines Neige-/Verschiebungselementes 20, an dem der die Bildebene 16 bildende Bildsensor 14 aufgenommen ist. Das Neige-/Verschiebungselement 20 umfasst ein erstes elastisches Anlenkelement 36, welches im Wesentlichen streifenförmig ausgebildet ist und eine erste Federsteifigkeit c₁ aufweist. Ferner umfasst das Neige-/Verschiebungselement 20 ein zweites, ebenfalls im Wesentlichen streifenförmig ausgebildetes elastisches Anlenkelement 38, welches eine zweite Federsteifigkeit c₂ aufweist, die höher ist als die Federsteifigkeit c₁ des ersten im Wesentlichen streifenförmig ausgebildeten elastischen Anlenkelementes 36. Darüber hinaus umfasst das Neige-/Verschiebungselement 20 ein drittes elastisches Anlenkelement 40, welches eine Federsteifigkeit c₁ aufweist, die der Federsteifigkeit des ersten, im Wesentlichen streifenförmig ausgebildeten Anlenkelementes 36, c₁, entspricht. Mittels der elastischen Anlenkelemente 36, 38 und 40 ist der Bildsensor 14 relativ zum stationär aufgenommenen, in einer Objektivhalterung 18 gelagerten Objektiv 12 verschwenkbar.

Dazu ist der Bildsensor 14 an einer ersten Anlenkstelle 22 mit dem ersten elastischen, im Wesentlichen streifenförmig ausgebildeten Anlenkelement 36, das eine Federsteifigkeit c₁ aufweist, verbunden. An einer zweiten Anlenkstelle 24 ist der Bildsensor 14 mit dem dritten elastischen Anlenkelement 40 mit Federsteifigkeit c₁ verbunden. Der Bildsensor 14 wird mittig durch das zweite elastische Anlenkelement 38 gestützt, welches sich in der Mitte des Fußes der Lagerung des Neige- und Verschiebungselementes 20 abstützt.

Mit Bezugszeichen 42 ist die Länge der elastischen, im Wesentlichen streifenförmig ausgebildeten Anlenkelemente 36, 38 und 40 bezeichnet, die den Abstand zwischen dem Bildsensor 14, d. h. der Bildebene 16 und dem in der Objektivhalterung 18 aufgenommenen Objektiv 12 bestimmt.

Aus der Darstellung gemäß Figur 1 geht hervor, dass bei Geradeausfahrt, angedeutet durch den mit Bezugszeichen 26 bezeichneten Pfeil, der Bildsensor 14 im Wesentlichen parallel zur Objektivebene 34 des Objektivs 12 ausgerichtet ist. Bei Geradeausfahrt, angedeutet durch den Pfeil 26, werden Parallelstrahlen 30 beziehungsweise 32 durch das Objektiv 12 auf einen Punkt F₂ der Bildebene 16 des Bildsensors 14 gelenkt. In der in Figur 1 dargestellten Position des Bildsensors 14 wird der unmittelbar vor dem Objektiv 12 liegende Straßenverlauf 28 erfasst, so dass vorausfahrende Fahrzeuge oder Gegenstände auf der Fahrbahn sehr leicht erkannt werden können. In dem in Figur 1 dargestellten Beispiel beträgt z. B. der Lenkeinschlag β am Fahrzeug gleich 0, da einem im Wesentlichen geraden Straßenverlauf 28 gefolgt wird.

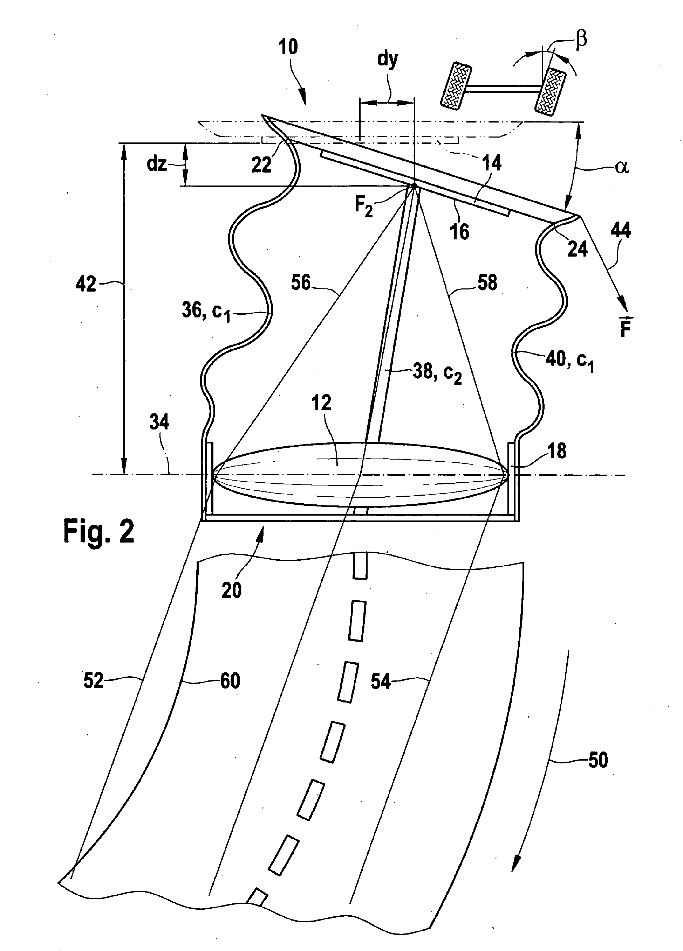

Der Darstellung gemäß Figur 2 ist die erfindungsgemäß vorgeschlagene Videokamera 10 bei Passage einer Rechtskurve zu entnehmen.

Bei der in Figur 2 durch Bezugszeichen 50 angedeuteten Passage einer Rechtskurve wird der Bildsensor 14 aus der in Figur 1 dargestellten, für Geradeausfahrt gültigen Bildsensorposition in eine relativ zu dieser um den Ablenkwinkel β verschwenkte Position ausgelenkt. Im Ausführungsbeispiel gemäß Figur 2 ist die Auslenkung des Bildsensors 14 abhängig vom Lenkwinkel des Fahrzeugs dargestellt. Anstelle des Lenkwinkels kann auch nicht erfindungsgemäß ein Gierwinkel oder eine Seitenbeschleunigung oder es können die Daten eines Fahrzeugnavigationssystems herangezogen werden. Die Verschwenkung des Bildsensors 14 erfolgt im Ausführungsbeispiel gemäß Figur 2 gegensinnig zum Lenkeinschlag β des Fahrzeugs; im Falle der Passage einer Rechtskurve 50 fährt das Fahrzeug nach rechts, während der Bildsensor 14 der Videokamera 10 gegensinnig dazu, d. h. nach links, ausgelenkt wird.

Der Bildsensor 14 ist, wie in Zusammenhang mit Figur 1 bereits erwähnt, an der ersten Anlenkstelle 22 mit dem ersten elastischen, im Wesentlichen streifenförmig ausgebildeten Anlenkelement 36 verbunden und an der zweiten Anlenkstelle 24 mit dem im Wesentlichen streifenförmig ausgebildeten dritten elastischen Anlenkelement 40 verbunden. Das erste elastische Anlenkelement 36 und das zweite elastische Anlenkelement 40 weisen jeweils identische Federsteifigkeiten c₁ auf. Abhängig vom Lenkeinschlag β oder nicht erfindungsgemäß einem Gierwinkel oder einer Seitenbeschleunigung oder von Navigationsdaten eines Fahrzeugnavigationssystems (GPS) des Fahrzeuges wird der Bildsensor 14 mit einer gerichteten Kraft *̅F̅*̅ Bezugszeichen 44, nach links ausgelenkt. Der Bildsensor 14 erfährt dabei gleichzeitig eine entsprechende seitliche Verschiebung dy, eine Fokussierung dz und eine Neigung α. Während die Länge 42 der einzelnen elastischen, im Wesentlichen streifenförmig ausgebildeten Anlenkelemente 36, 38, 40 die Größe der Nachführung der Defokussierung dz festlegt, bestimmt die Ausgestaltung der streifenförmig ausgebildeten elastischen Anlenkelemente 36 und 40, d. h. die Gestaltung der außenliegenden Anlenkelemente im Gegensatz zum mittig angeordneten zweiten streifenförmigen Anlenkelement 38, die Neigung α des Bildsensors 14. Bevorzugt werden die beiden außenliegend angeordneten, im Wesentlichen streifenförmig ausgebildeten elastischen Anlenkelemente 36 und 40 in einer kleineren Federsteifigkeit c₁ verglichen mit der Federsteifigkeit c₂ des zweiten, mittig angeordneten elastischen Anlenkelementes 38 ausgebildet. Dadurch sind die beiden außenliegend angeordneten elastischen Anlenkelemente 36 und 40 des Neige-/Verschiebungselementes 20 stärker elastisch verformbar als das mittig angeordnete zweite elastische, im Wesentlichen streifenförmig ausgebildete Anlenkelement 38. Dieses weist eine Federsteifigkeit c₂ auf, die größer ist als die Federsteifigkeit c₁ der beiden außenliegend angeordneten elastischen Anlenkelemente 36 beziehungsweise 40. Greift die in Figur 2 dargestellte gerichtete Kraft *̅F̅*̅ vergleiche Bezugszeichen 44, am Bildsensor 14 an, wird sich dieser um einen Winkel α neigen. Durch geeignete Wahl der Federsteifigkeiten c₁ und c₂, des Betrages und der Richtung der gerichteten Kraft *̅F̅*̅ die am Bildsensor 14 entsprechend des Lenkeinschlags β eines Gierwinkels oder einer Seitenbeschleunigung des Fahrzeugs angreift, kann die für die jeweilige Auslenkung β erforderliche Neigung α sowie die Defokussierung dz des Bildsensors 14 gleichzeitig eingestellt werden. Neben dem erwähnten Lenkeinschlag β, einem Gierwinkel oder einer Seitenbeschleunigung kann die Auslenkung des Bildsensors 14 auch nicht erfindungsgemäß abhängig von Navigationsdaten eines Fahrzeugnavigationssystems, wie z. B. dem GPS-System, vorgenommen werden. Die Länge 42 der elastischen, im Wesentlichen streifenförmig ausgebildeten Anlenkelemente 36, 38, 40 des Neige-/Verschiebungselementes 20 bestimmt den Verlauf der Defokussierung dz.

Durch das Verschwenken des Bildsensors 14, gekennzeichnet durch die Parameter Neigung α, seitliche Verschiebung dy und Defokussierung dz, wird der Bildsensor 14 dem Straßenverlauf 60 gemäß Figur 2 derart nachgeführt, dass sich der vor dem Fahrzeug liegende, in Bälde zu passierende Straßenverlauf 60 im Wesentlichen vollständig erfassen lässt. Dabei kann jedoch vermieden werden, die Videokamera 10 als Ganzes zu verschwenken. Die Verschwenkung des Bildsensors 14, der an dem erfindungsgemäß vorgeschlagenen Neige-/Verschiebungselement 20 aufgenommen ist, ermöglicht die Erfassung des gesamten vor der Videokamera 10 liegenden Straßenverlaufs 60 bei Passage einer Rechtskurve 50. Wenngleich zeichnerisch nicht dargestellt, gilt dies analog für die Passage einer Linkskurve, bei der die gerichtete Kraft *̅F̅*̅ vergleiche Bezugszeichen 44, nicht in der Nähe der zweiten Anlenkstelle 24 am Bildsensor 14 angriffe, sondern an der dieser gegenüberliegenden ersten Anlenkstelle 22, an welcher der Bildsensor 14 mit dem ersten elastischen, im Wesentlichen streifenförmig ausgebildeten Anlenkelement 36 verbunden ist.

Entsprechend der Verschwenkung des Bildsensors 14 fallen der erste Parallelstrahl 52 und der zweite Parallelstrahl 54 nach Passage des Objektivs 12 und der Objektivebene 34 auf den Punkt F₂ der Bildebene 16 des Bildsensors 16, in der Darstellung zur Figur 2 um die Neigung α verkippt und um die seitliche Verschiebung dy verschoben sowie um die Strecke dz defokussiert. Von der Objektivebene 34 des Objektivs 12 fallen die Sammelstrahlen 56, 58, hier schematisch dargestellt, in die Mitte der Bildebene auf den Punkt F₂.

Aus der Darstellung gemäß Figur 2 geht hervor, dass das dritte elastische, im Wesentlichen streifenförmig ausgebildete Anlenkelement 40 gestaucht ist, während das mittlere, zweite elastische Anlenkelement 38, welches die höhere Federsteifigkeit c₂ aufweist, in Bezug auf den Fuß des Neige- und Verschiebungselements 20 lediglich um einige Winkelgrade geschwenkt ist. Das erste elastische Anlenkelement 36, welches die Federsteifigkeit c₁ aufweist, ist aufgrund der Verschwenkung des Bildsensors 14 gestreckt.

Bei der Passage einer Linkskurve, was, wie oben erwähnt, nicht dargestellt ist, kehren sich die Stauch- beziehungsweise Streckverhältnisse gerade um.

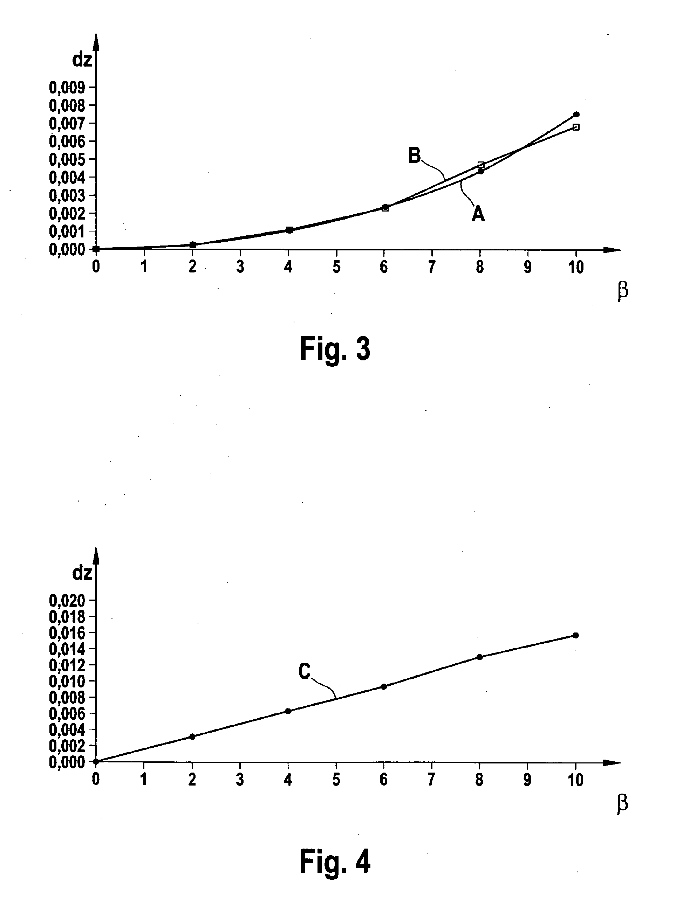

Der Darstellung gemäß Figur 3 ist die Defokussierung für ein LDW-System, d. h. ein Lane Departure Warning-System, mit +/- 22° Öffnungswinkel und einer Brennweite von 7 mm in Abhängigkeit vom Ablenkwinkel β zu entnehmen. Der maximale Ablenkwinkel β beträgt für das betrachtete System maximal 10°. Damit ergibt sich ein Gesamtöffnungswinkel von +/- 32° für das betrachtete Videokamerasystem, wie in den Figuren 1 und 2 schematisch dargestellt. Für die in den Figuren 1 und 2 dargestellte Länge 42 der elastischen Anlenkelemente 36, 38, 40 des Neige-/Verschiebungselementes 20 ergibt sich eine sehr gute Übereinstimmung der Fokussierungskurven, vergleiche Kurvenverläufe A (optische Verschiebung in z-Richtung) und B (mechanische Verschiebung in z-Richtung). Die Kurvenzüge A und B verlaufen bis zu einem Ablenkwinkel β nahezu identisch. Die gute Übereinstimmung der beiden in Figur 3 dargestellten Defokussierungskurven A und B bedeutet, dass das Bild der Szene vor dem Fahrzeug trotz der Ablenkung nicht defokussiert wird, da es durch das Neige- und Verschiebungselement 20 geeignet nachgeführt wird.

In Figur 4 ist die Neigung α des Bildsensors in Abhängigkeit vom Ablenkwinkel β aufgetragen.

Gemäß des in Figur 4 dargestellten Kurvenzuges C können die Defokussierung dz und die Neigung α sehr gut kompensiert werden, wohingegen die seitliche Verschiebung dy akzeptabel kompensiert werden kann. Dies bedeutet, dass das Bild des Bildsensors 14 mit hoher Schärfeleistung wiedergegeben wird, jedoch als seitlich versetztes Bild reproduziert wird.

Hinsichtlich der Optimierungskriterien dy, dz und α ist alternativ auch denkbar, eine Kompensation der Neigung α und der seitlichen Verschiebung dy vorzunehmen, was zu einem geringeren seitlichen Versatz des erhaltenen Bildes führt, wobei jedoch aufgrund der nicht kompensierten Defokussierung dz über das gesamte Bild des Bildsensors 14 eine gleichmäßige Unschärfe erhalten wird.

Schließlich ist es ebenfalls denkbar, die erwähnten Parameter dy, dz und α vermittelnd zu kompensieren, was zu einem geringeren seitlichen Versatz einer akzeptablen Schärfe des Bildes führt. Hinsichtlich der Optimierungsparameter spielt die Applikation der Videokamera 10 die maßgebliche Rolle, so dass sich die zu optimierenden Parameter dy, dz und α nach dem Einsatzzweck der Videokamera 10 richten.

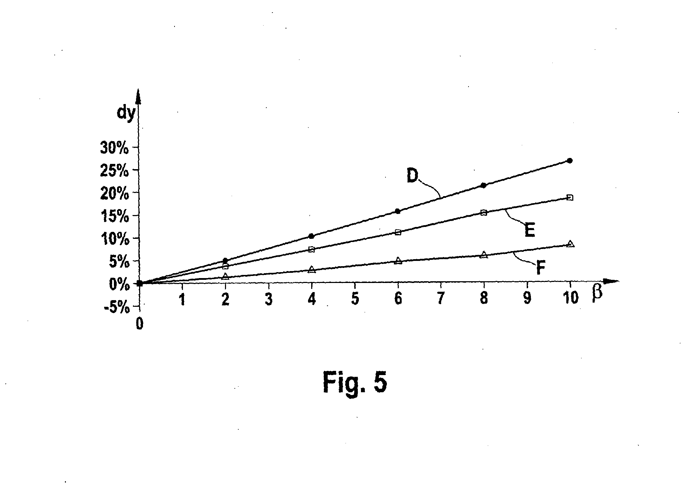

Durch entsprechende Auslegung der elastischen Anlenkelemente 36, 38, 40 des Neige-/Verschiebungselementes 20 hinsichtlich der ausgewählten Federsteifigkeiten c₁ und c₂, *̅F̅*̅ des Betrages und der Richtung der einwirkenden Kraft 44 kann die für den Lenkwinkel β erforderliche Neigung α sowie die Defokussierung dz des Bildsensors 14 gleichzeitig erzielt werden. Des Weiteren kann auch die seitliche Verschiebung dy ausgeglichen werden. Die seitliche Verschiebung dy, vergleiche Darstellung gemäß Figur 5, ist durch die Länge 42 der elastischen Anlenkelemente 36, 38 und 40 festgelegt. Dies bedeutet, dass sich entweder die Defokussierung dz oder die seitliche Verschiebung dy ausgleichen lässt.

Wie aus der Darstellung gemäß Figur 3 hervorgeht, wurde die Defokussierung dz ausgeglichen. Zwangsläufig ergab sich für die seitliche Verschiebung dy eine Abweichung von weniger als 8%, wie aus Figur 5, vergleiche Kurvenzug F, hervorgeht. Während in Kurvenzug D die seitliche Bildverschiebung in y-Richtung (optisch) angegeben ist, stellt Kurvenzug E die seitliche Bildverschiebung in y-Richtung (mechanisch) dar. Die Differenz der beiden Kurvenzüge D und E ist als Kurvenzug F dargestellt. Aus den Kurvenzügen der Figuren 3, 4 und 5 ist mithin entnehmbar, dass bei Ausgleich der Neigung α und der Defokussierung dz eine seitliche Verschiebung dy von etwa 8% verbleibt, die jedoch für Anwendungen im Kraftfahrzeug tolerierbar ist.

## Patentansprüche

1. Verfahren zur Erfassung des Straßenverlaufs (28, 60) mit einer Videokamera (10), insbesondere an Kraftfahrzeugen, wobei die Videokamera (10) mindestens ein Objektiv (12) und mindestens einen Bildsensor (14) aufweist, wobei der Bildsensor (14) der Videokamera (10) abhängig von fahrdynamischen Parametern des Fahrzeugs verschwenkt wird, **dadurch gekennzeichnet dass** der Bildsensor (14) relativ zum Objektiv (12) gegensinnig zum Lenkwinkel β verschwenkt wird.

2. Verfahren gemäß Anspruch 1, **dadurch gekennzeichnet, dass** der Bildsensor (14) gegensinnig zum Lenkwinkel β mit einer gerichteten Kraft F̅ (44) beaufschlagt wird, wodurch der Bildsensor (14) eine seitliche Verschiebung, eine Fokussierung und eine Neigung erfährt.

3. Verfahren gemäß Anspruch 1, **dadurch gekennzeichnet, dass** beim Verschwenken des Bildsensors (14) eine Neigung α und eine Defokussierung dz des Bildsensors (14) gleichzeitig ausgeglichen werden.

4. Verfahren gemäß Anspruch 1, **dadurch gekennzeichnet, dass** beim Verschwenken des Bildsensors (14) eine Neigung α und eine seitliche Verschiebung dy des Bildsensors (14) gleichzeitig ausgeglichen werden.

5. Verfahren gemäß Anspruch 1, **dadurch gekennzeichnet, dass** beim Verschwenken des Bildsensors (14) die Parameter Neigung α, seitliche Verschiebung dy und Defokussierung dz vermittelnd kompensiert werden.

6. Videokamera (10) zur Erfassung des Straßenverlaufs (28, 60), insbesondere für Kraftfahrzeuge, mit mindestens einem Bildsensor (14) und mindestens einem Objektiv (12), **dadurch gekennzeichnet, dass** der Bildsensor (14) an einem Neige- und Verschiebungselement (20) aufgenommen ist, wodurch der Bildsensor (14) relativ zum objektiv (12) gegensinnig zum Lenkwinkel β verschwenkbar ist.

7. Videokamera (10) gemäß Anspruch 6, **dadurch gekennzeichnet, dass** das Neige-und Verschiebungselement (20) elastische Anlenkelemente (36, 38, 40) aufweist, an denen der Bildsensor (14) an mindestens zwei Anlenkstellen (22, 24) angelenkt ist.

8. Videokamera (10) gemäß Anspruch 6, **dadurch gekennzeichnet, dass** das Neige- und Verschiebungselement (20) auf der Objektseite des Objektivs (12) gelagert ist.

9. Videokamera (10) gemäß Anspruch 7, **dadurch gekennzeichnet, dass** das erste und das dritte elastische Anlenkelement (36, 40) eine Federsteifigkeit c₁ aufweisen, die geringer ist als die Federsteifigkeit c₂ eines mittig angeordneten zweiten elastischen Anlenkelementes (38).

10. Videokamera (10) gemäß Anspruch 7, **dadurch gekennzeichnet, dass** die elastischen Anlenkelemente (36, 38, 40) im Wesentlichen streifenförmig ausgeführt sind und eine Länge (42) aufweisen, die den Abstand zwischen dem Objektiv (12) und der Bildebene (16) des Bildsensors (14) bestimmt.

11. Verwendung einer Videokamera (10) gemäß einem der Ansprüche 6 bis 10 in einem Kraftfahrzeug zur Erfassung des vor dem Kraftfahrzeug liegenden Straßenverlaufes (28, 60).

## Claims

1. Method for acquiring the road profile (28, 60) with the aid of a video camera (10), in particular on motor vehicles, the video camera (10) having at least one objective (12) and at least one image sensor (14), the image sensor (14) of the video camera (10) being pivoted as a function of driving dynamics parameters of the vehicle, **characterized in that** the image sensor (14) is pivoted relative to the objective (12) in a sense opposite to the steering angle β.

2. Method according to Claim 1, **characterized in that** a directed force *̅F̅*̅ (44) is applied to the image sensor (14) in the sense opposite to the steering angle β, with the result that the image sensor (14) experiences a lateral displacement, a focusing and an inclination.

3. Method according to Claim 1, **characterized in that** during pivoting of the image sensor (14) an inclination α and a defocusing dz of the image sensor (14) are simultaneously compensated.

4. Method according to Claim 1, **characterized in that** during pivoting of the image sensor (14) an inclination α and a lateral displacement dy of the image sensor (14) are simultaneously compensated.

5. Method according to Claim 1, **characterized in that** during the pivoting of the image sensor (14) the parameters of inclination α, lateral displacement dy and defocusing dz are compensated in a mediating fashion.

6. Video camera (10) for acquiring the road profile (28, 60), in particular for motor vehicles, having at least one image sensor (14) and at least one objective (12), **characterized in that** the image sensor (14) is accommodated on an inclining and displacement element (20), as a result of which the image sensor (14) can be pivoted relative to the objective (12) in a sense opposite to the steering angle β.

7. Video camera (10) according to Claim 6, **characterized in that** the inclining and displacement element (20) has elastic articulation elements (36, 38, 40) on which the image sensor (14) is articulated at at least two articulation points (22, 24).

8. Video camera (10) according to Claim 6, **characterized in that** the inclining and displacement element (20) is mounted on the object side of the objective (12).

9. Video camera (10) according to Claim 7, **characterized in that** the first and the third elastic articulation elements (36, 40) have a spring stiffness c₁ which is lower than the spring stiffness c₂ of a second elastic articulation element (38) arranged in the middle.

10. Video camera (10) according to Claim 7, **characterized in that** the elastic articulation elements (36, 38, 40) are designed substantially in the form of strips and have a length (42) which determines the spacing between the objective (12) and the image plane (16) of the image sensor (14).

11. Use of a video camera (10) according to one of Claims 6 to 10 in a motor vehicle in order to acquire the road profile (28, 60) lying in front of the motor vehicle.

## Revendications

1. Procédé de détection du tracé de la route (28, 60) avec une caméra vidéo (10), notamment sur des véhicules automobiles, la caméra vidéo (10) présentant au moins un objectif (12) et au moins un capteur d'image (14), le capteur d'image (14) de la caméra vidéo (10) étant pivoté en fonction des paramètres de déplacement dynamiques du véhicule, **caractérisé en ce que** le capteur d'image (14) est pivoté par rapport à l'objectif (12) dans le sens inverse à l'angle de changement de direction β.

2. Procédé selon la revendication 1, **caractérisé en ce que** le capteur d'image (14) est soumis à une force *̅F̅*̅ (44) dirigée dans le sens inverse à l'angle de changement de direction β, ce qui a pour effet que le capteur d'image (14) est soumis à un décalage latéral, une mise au point et une inclinaison.

3. Procédé selon la revendication 1, **caractérisé en ce que** lors du pivotement du capteur d'image (14), une inclinaison α et un déréglage de la mise au point dz du capteur d'image (14) sont compensés simultanément.

4. Procédé selon la revendication 1, **caractérisé en ce que** lors du pivotement du capteur d'image (14), une inclinaison α et un décalage latéral dy du capteur d'image (14) sont compensés simultanément.

5. Procédé selon la revendication 1, **caractérisé en ce que** lors du pivotement du capteur d'image (14), les paramètres inclinaison α, décalage latéral dy et déréglage de la mise au point dz sont compensés en moyenne.

6. Caméra vidéo (10) pour détecter le tracé de la route (28, 60), notamment pour des véhicules automobiles, comprenant au moins un capteur d'image (14) et au moins un objectif (12), **caractérisée en ce que** le capteur d'image (14) est monté sur un élément d'inclinaison et de décalage (20) par le biais duquel le capteur d'image (14) peut être pivoté par rapport à l'objectif (12) dans le sens inverse à l'angle de changement de direction β.

7. Caméra vidéo (10) selon la revendication 6, **caractérisée en ce que** l'élément d'inclinaison et de décalage (20) présente des éléments d'articulation souples (36, 38, 40) auxquels le capteur d'image (14) est fixé en au moins deux points d'articulation (22, 24).

8. Caméra vidéo (10) selon la revendication 6, **caractérisée en ce que** l'élément d'inclinaison et de décalage (20) est monté du coté objet de l'objectif (12).

9. Caméra vidéo (10) selon la revendication 7, **caractérisée en ce que** les premier et troisième éléments d'articulation souples (36, 40) présentent une rigidité de ressort c₁ qui est inférieure à la rigidité de ressort c₂ d'un deuxième élément d'articulation souple (38) disposé au centre.

10. Caméra vidéo (10) selon la revendication 7, **caractérisée en ce que** les éléments d'articulation souples (36, 38, 40) sont pour l'essentiel réalisés en forme de bandes et présentent une longueur (42) qui détermine l'écart entre l'objectif (12) et le plan d'image (16) du capteur d'image (14).

11. Utilisation d'une caméra vidéo (10) selon l'une des revendications 6 à 10 dans un véhicule automobile pour détecter le tracé de la route (28, 60) devant le véhicule automobile.
